# EUROPÄISCHE PATENTSCHRIFT

(11) **EP 1 531 136 B1**
(45) Veröffentlichungstag und Bekanntmachung des Hinweises auf die Patenterteilung: **21.06.2006**
(21) Anmeldenummer: 04105551.8
(22) Anmeldetag: 05.11.2004
(51) Int. Cl.: B65G 67/08

(54) **Vorrichtung zum Beladen eines Transportbehälters mit Gegenständen**
Device for loading objects in a transport container
Dispositif de chargement d'un conteneur de transport avec des objets

(30) Priorität: 11.11.2003 AT 18132003
(43) Veröffentlichungstag der Anmeldung: 18.05.2005
(73) Patentinhaber: Deininger, Karl, 8680 Mürzzuschlag (AT)
(72) Erfinder: Deininger, Karl, 8680 Mürzzuschlag (AT)
(74) Vertreter: KLIMENT & HENHAPEL

(56) Entgegenhaltungen:
- DD-A- 81 613
- DE-A1- 2 107 873
- DE-A1- 3 703 969
- US-A- 1 073 376

## Beschreibung

Die Erfindung betrifft eine Vorrichtung zum Beladen eines Transportbehälters, insbesondere eines Großraumwaggons, gemäß Oberbegriff des Anspruches 1.

Eine solche Vorrichtung ist etwa aus der DD 81613 A bekannt. Bei dieser bekannten Vorrichtung werden die Stückgüter über einen horizontal fördernden Zubringerförderer dem Aufgabenbereich des Teleskopgurtförderers zugeführt. Damit Stückgüter auch in höher gelegenen Lagen des Transportbehälters abgelegt werden können, kann der Fördergurt des Teleskopgurtförderers in eine Schräglage verschwenkt werden.. Diese bekannte Vorrichtung hat den Nachteil das sie nur für Stickgüter mit großer glatter Auflagefläche verwendbar ist. Durch die Schrägstellung des Gurtes des Teleskopgurtförderer beginnen die Stückgüter in Richtung des Aufgabebereiches zu rutschen, so dass diese Vorrichtung zum Verladen von etwa rollenförmigen Stückgüter nicht geeignet ist.

Die US 1073376 A beschreibt einen Teleskopgutförderer, der auf einem auf Schienen verführbaren Gestell befertigt ist. Der Teleskopförderer ruht auf einem an der Oberseite des Gestells angeordneten Drehteller. Der Teleskopgutförderer wird auf Schienen in den Transportbehälter eingefahren und dann in Längsrichtung des Transportbehälters gedreht. Diese Beladevorrichtung besitzt keinen Zubringerförderer, so dass die Zufuhr der Stückgüter zum Aufgabeende des Teleskopförderer umständlich ist. Weiters kann der Teleskopförderer nur schräg aber nicht höhenverteilt werden, wodurch das Beladen des Transportbehälter mit rollförmigen Stückgütern nicht möglich ist.

Aus der DE 3703969 A ist eine Beladevorrichtung bekannt, bei der einer höher verstellbaren Plattform über Gurtförderer und Rollenbahnen die Stückgüter zugeführt werden können. Die Plattform ist an einen zweiarmigen Ausleger befestigt. Bei dieser sehr aufwendigen Beladevorrichtung weisen jedoch die Zuführbahnen starke Neigung auf, sodass sie für Stückgüter mit gekrümmter Auflagefläche nicht geeignet ist.

Aufgabe der Erfindung ist es, die Nachteile der bekannten Beladevorrichtungen zu beseitigen und eine Vorrichtung zu schaffen, welche eine automatische Be- bzw. Entladung des Transportbehälters mit Stückgütern mit gekrümmter Auflagefläche, insbesondere rollenförmigen Stückgütern durch die Seitenöffnung des Transportbehälters hindurch ermöglichen.

Dies wird erfindungsgemäß durch die Merkmale des Kennzeichens des Anspruches 1 erreicht.

Durch die erfindungsgemäße Anordnung werden auch Stückgüter mit gekrümmter Auflagefläche durch die spezielle Konstruktion des Schrägförderer sicher und auf einfache Weise in die jeweils erforderliche Höhenlage transportiert. Nach Übergabe an den Teleskopgurtförderer werden sodann die Stückgüter immer in einer horizontaler Lage gehalten.

Bei einer Ausführungsvariante nach Anspruch 2 ruht die Hebebühne auf einem Drehkreuz, wodurch die aus Hebebühne und Teleskopgutförderer bestehende Einheit innerhalb des Transportbehälters leicht gedreht werden kann. Dies ermöglicht sowohl die Rundumschlichtung der Stückgüter in einer horizontalen Ebene als auch eine Beladung in vertikaler Richtung.

Durch die Merkmale des Anspruches 3 und 4 können Stückgüter von der im Korb stehenden Bedienungsperson leicht vom Gurt des Teleskopgurtförderers entnommen werden und eingeschlichtet werden, wobei die Steuerung der Antriebe von Schrägförderer, Hebebühne und Teleskopgurtförderer direkt von der im Korb stehenden Bedienungsperson vorgenommen werden kann.

Vorzugsweise ist gemäß Anspruch 5 die Hebebühne als Scherenhubtisch ausgebildet, wodurch eine einfache und betriebssichere Höhenverstellbarkeit des Teleskopgurtförderers gewährleistet ist.

Vorzugsweise sind gemäß Anspruch 6 an der Rückseite des Gehäuses des Teleskopgurtförderers Öffnungen zum Einführen der Zinken eines Gabelstaplers vorgesehen. Dies ermöglicht ein Hochheben der aus Hebebühne und Teleskopgurtförderer gebildeten Einheit und ein Einbringen dieser Einheit über die Unterkante der Seitenöffnung des Transportbehälters.

Die Schaufel des Schrägförderer kann gemäß Anspruch 7 um ein Gelenk nach vorne kippbar ausgeführt werden, wodurch die Übergabe der Stückgüter von Schrägförderer zu Teleskopgurtförderer erleichtert wird. Der Rahmen des Linearförderers ist am aufgabeseitigem Ende zweckmäßiger Weise mit einer auf der Beladerampe aufliegenden Stückrolle versehen. Durch diese Merkmale passt sich der Schrägförderer automatisch der Höhenlage des Teleskopförderers an, wobei die Stückgüter automatisch von der Schaufel an den Gurt des Teleskopgurtförderers übergeben werden.

Die Erfindung wird nun weiter an Hand der beiliegenden Figuren näher erläutert. Dabei zeigen:
die Fig. 1 in schematischer Form eine Seitenansicht der erfindungsgemäßen Vorrichtung mit abgesenkter Hebebühne in einem Grossraumwaggon,
die Fig.2 eine Vorderansicht der erfindungsgemäßen Vorrichtung nach Fig. 1,
die Fig. 3 in schematischer Form eine Seitenansicht der Vorrichtung nach Fig. 1 mit angehobener Hebebühne,
die Fig. 4 eine Vorderansicht der Vorrichtung nach Fig. 3,
die Fig. 5 eine Seitenansicht eines erfindungsgemäßen Scherenhubtisches,
die Fig. 6 und 7 in schematischer Form eine Seitenansicht des Teleskopgurtförderers im eingezogenen und halbeingezogenen Zustand,
die Fig. 8 eine Seitenansicht eines erfindungsgemäßen Schrägförderers und

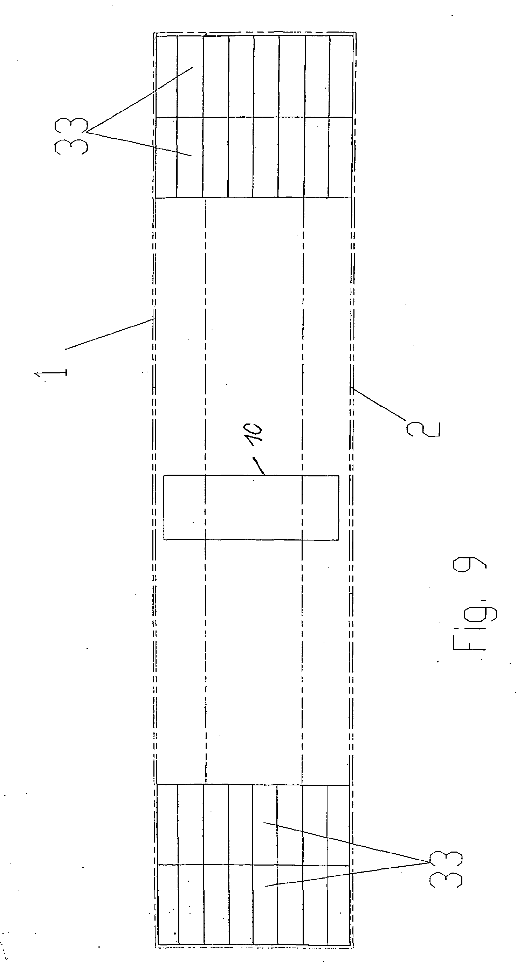

die Fig.9 eine Draufsicht auf die erfindungsgemäße Vorrichtung in der Transportstellung nach Einbringung in den Grossraumwaggon.

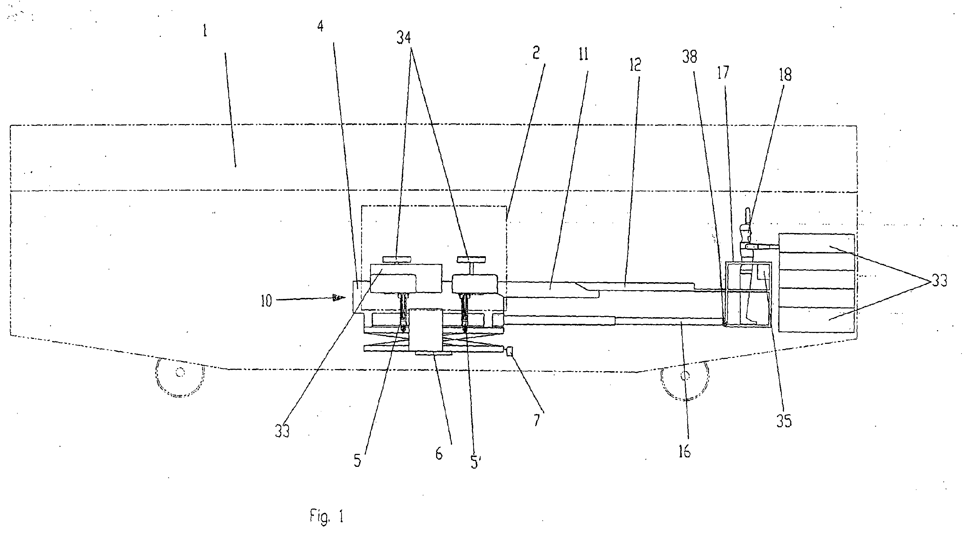

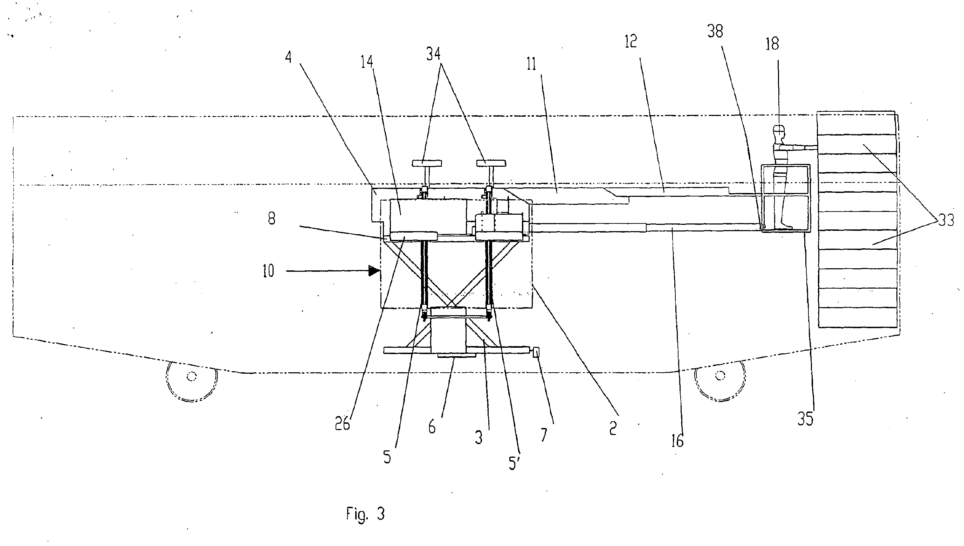

Die Fig. 1 bis 4 zeigen in strichpunktierten Linien die Umrisse eines Grossraumwaggons 1, in dem eine erfindungsgemäße Vorrichtung 10 angeordnet ist. Der Grossraumwaggon 1 besitzt eine Seitenöffnung 2, durch die die Vorrichtung 10 in den Grossraumwaggon 1 in noch zu beschreibender Weise eingebracht wird. Die Vorrichtung 10 besteht aus einer Hebebühne 3, einem auf dieser angeordneten Teleskopgurtförderers 4 und zwei Schrägförderern 5, 5'.

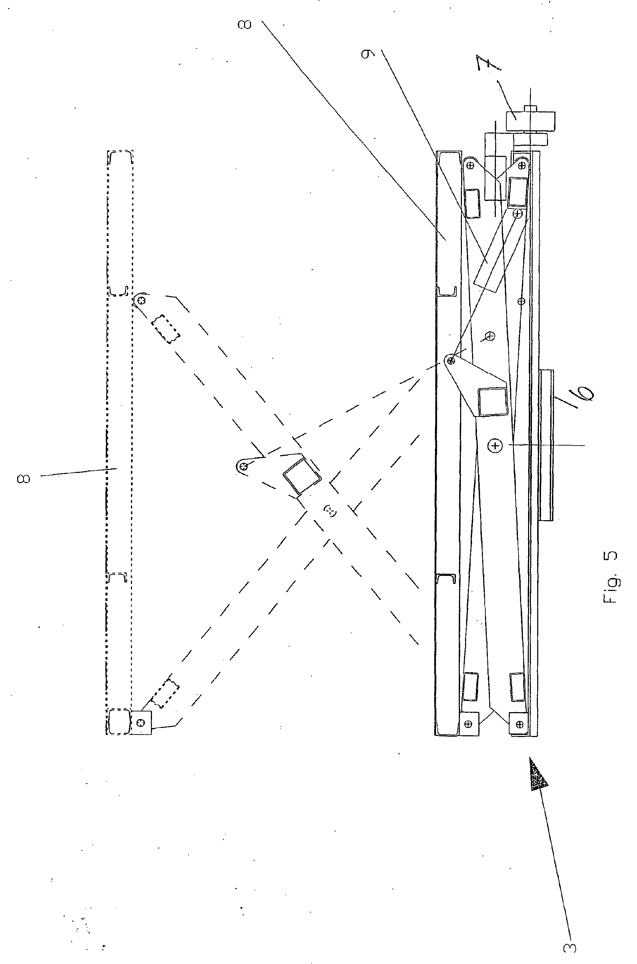

Die Hebebühne 3 ist als Scherenhubtisch ausgeführt, der auf einem Drehkranz 6 ruht und stirnseitig durch Stützräder 7 gesichert ist. Der Scherenhubtisch 3 ist von bekannter Bauart und ist in Fig. 5 schematisch in abgesenkter und strichpunktiert in angehobener Lage dargestellt ist. Der Antrieb zum Heben der Plattform 8 des Scherenhubtisches 8 erfolgt durch einen Hydraulikzylinder 9. Anstelle eines Hydraulikantriebes kann in bekannter Weise auch ein Spindelantrieb verwendet werden.

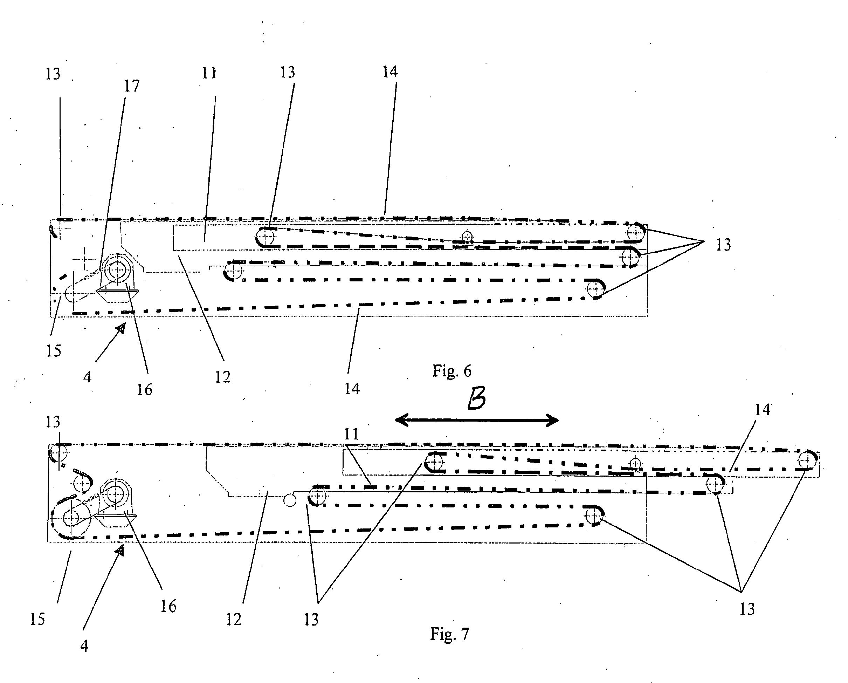

Auf der Plattform 8 des Scherenhubtisches 3 ist ein Teleskopgurtförderer 4 bekannter Bauart angeordnet. In den Fig. 6 und 7 ist der Teleskopgurtförderer im eingezogenen Zustand (Fig.6) und im halb ausgefahrenem Zustand (Fig. 7) dargestellt. Der Teleskopgurtförderer 4 besitzt ein- und ausfahrbare (Pfeil B) Teleskopelemente 11, 12, welche Führungsrollen 13 für den umlaufenden Gurt 14 tragen. Der Antrieb des Gurtes 14 erfolgt durch eine Antriebsrolle 15, die von einem Motor 16 über einen Keilriemen oder Kettenantrieb 17 angetrieben wird. Unterhalb des Gurtes 14 des Teleskopförderers 4 ist ein aus einzelnen Elementen gebildeter teleskopartig ein- und ausfahrbarer Tragarm 16 angeordnet, an dessen Ende ein Korb 17 zur Aufnahme einer die Stückgüter im Grossraumwaggon 1 schlichtenden Person 18 befestigt ist. Der Korb 17 ist um eine Achse 38 in eine Transportstellung kippbar.

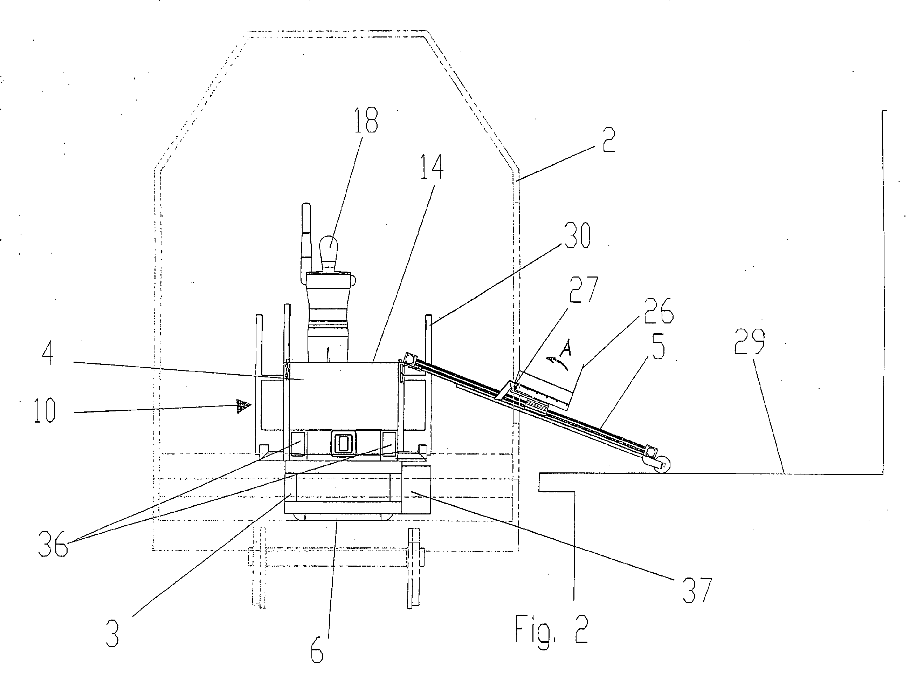

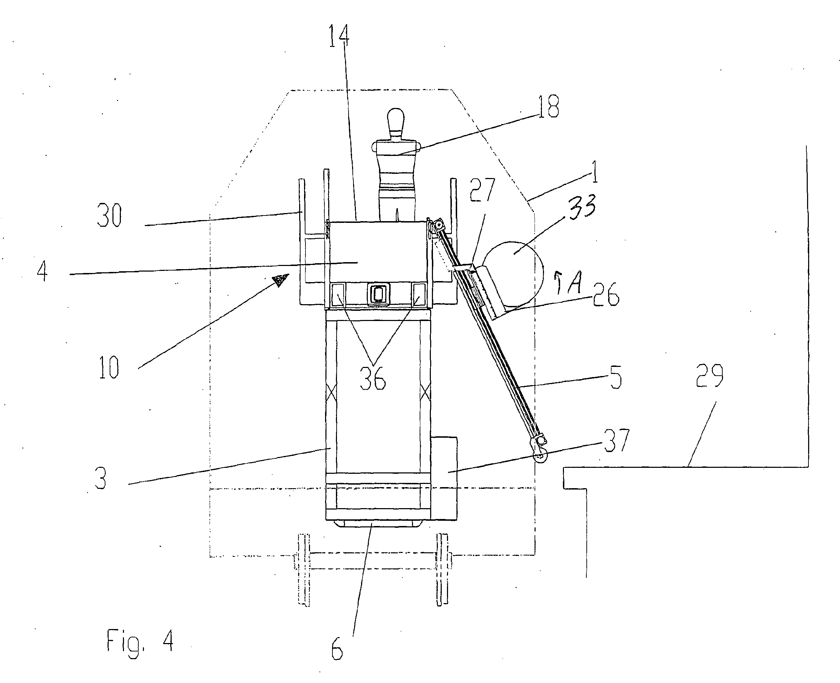

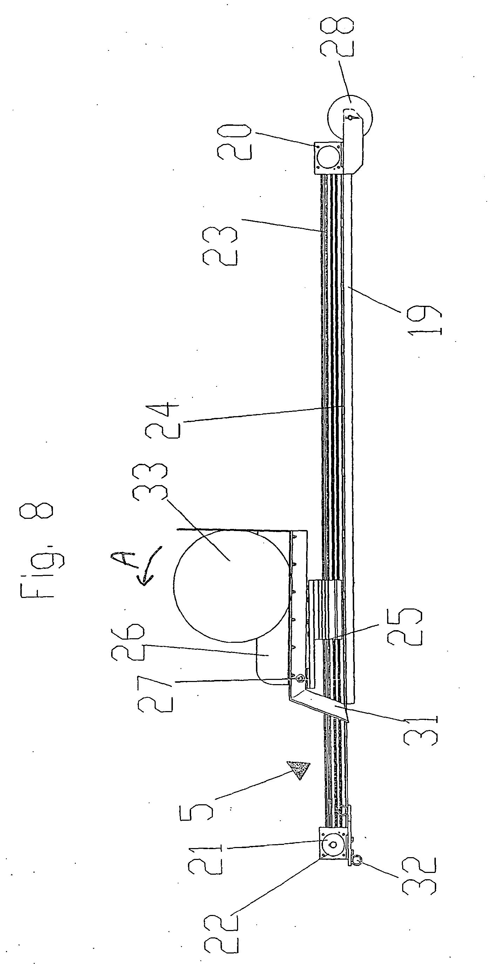

Die Schrägförderer 5 sind als Linearförderer bekannter Bauart ausgeführt (siehe Fig. 8). Am Rahmen 19 ist zwischen den Umlaufrollen 20, 21 ein von einem Motor 22 bewegtes Band 23 angeordnet, welches einen auf einer Schiene 24 geführten Schlitten 25 hin und herbewegt. Auf dem Schlitten 25 ist eine Schaufel 26 um eine Gelenk 27 kippbar (Pfeil A) befestigt. Am Aufgabeende ist am Rahmen 19 ein Stützrad 28 drehbar befestigt, welches im Betrieb auf einer Beladerampe 29 (Fig. 2 und 4) ruht. Abgabeseitig ist der Rahmen 19 des Linearförderers 5 am Rahmen 30 des Teleskopgurtförderes 4 lösbar befestigt. Die Schaufel 26 besitzt einen Fortsatz 31, welcher gegen einen Anschlag 32 am Abgabeende führbar ist. Erreicht die Schaufel 26 ihren oberen Totpunkt kippt die Schaufel 26 um das Gelenk 27, wodurch das auf der Schaufel 26 befindliche Stückgut 33 auf den Gurt 14 des Teleskopgurtförderes 4 gekippt wird. Am Rahmen 30 des Teleskopgurtförderers sind Prallplatten 34 befestigt, welche gewährleisten, dass das Stückgut sich nicht über den Gurt 14 hinaus bewegt.

In einem Kasten 37 sind die Steuergeräte für die Antriebe für die Linearförderer 5, 5' die Hebebühne 3 und den Teleskopgurtförderer 4 angeordnet, wobei die Steuerung von einer am Korb 17 angeordneten Bedienungsarmatur 35 durch die Bedienungsperson 18 vorgenommen wird.

Die aus Scherenhubtisch 3 und Teleskopgurtförder 4 gebildete Einheit 3, 4 wird im eingezogenen Zustand von einem Gabelstapler (nicht gezeigt), dessen Zinken in die Öffnungen 36 im Rahmen 30 des Teleskopgurtförderers eingreifen hochgehoben und über der Unterkante der Seitenöffnung 2 in das Innere des Transportbehälters 1 quer zur Längsachse des Transportbehälter 1 bewegt. Nach Herstellung der elektrischen Verbindungen wird der Scherenhubtisch 3 nach unten ausgefahren bis der Drehkreuz 6 auf dem Boden des Transportbehälters aufruht. Die Einheit 3, 4 wird dann um 90° auf die eine zu beladende Seite geschwenkt. Sodann wird diese eine Seite des Transportbehälters 1 beladen, wobei die Bedienungsperson 18 die Höhenlage des Scherenhubtisches 3 und die Ausfahrlänge des Teleskopgurtförderes 4 über die Bedienungsarmatur 35 steuert. Ist diese eine Seite des Transportbehälters 1 beladen wird die Einheit 3, 4 um 180° auf die andere Seite geschwenkt und diese Seite mit den Stückgütern 33 beladen. Ist dies geschehen, wird nach dem Zurückschwenken der Einheit 3, 4 um 90° die Einheit per Gabelstapler aus dem Transportbehälter 1 gehoben und vor der Seitenöffnung 2 auf der Laderampe 29 abgestellt. Sodann wird der Teleskopgurtförder 4 mit dem Korb 17 in den Transportbehälter 1 gefahren und der verbleibende Leerraum mit den Stückgütern 33 befüllt.

Bei der Beladung des Transportbehälters 1 werden die Stückgüter 33 vom Bedienungspersonal von der Beladerampe 29 auf die Schaufel 26 abgelegt und zwar abhängig davon, welche Schaufel 26 der beiden Linearförderer 5, 5' sich gerade in der unteren Beladestellung befindet. Die beladene Schaufel 26 des einen Linearförderers 5 fährt automatisch hoch während sich die leere Schaufel 26 des anderen Linearförderers 5' nach unten bewegt. Kurz bevor die beladene Schaufel 26 die Entladestellung erreicht, wird der Fortsatz 31 gegen den Anschlag 32 bewegt, wodurch die Schaufel 26 um das Gelenk 27 gekippt wird und das Stückgut auf den Gurt 14 des Teleskopgurtförderes 4 befördert wird. Das vom Gurt 14 nach vorne bewegte Stückgut 33 wird sodann von der im Korb 17 stehenden Bedienungsperson 18 eingeschlichtet. Die Linearbewegung der Teleskopstange 16 mit dem Korb 17 erfolgt durch Zwangsführung mit dem Gurt 14 des Teleskopgurtförderers 4.

## Patentansprüche

1. Vorrichtung zum Beladen eines Transportbehälters (1), etwa eines Grossraumwaggons, durch eine Seitenöffnung (2) mit Stückgut (33) mit einem in den Transportbehälter (1) einfahrbaren und in Längsrichtung des Transportbehälters drehbaren Teleskopgurtförderers (4) und einem quer zur Förderrichtung des Teleskopgurtförderers (4) angeordneten Zubringerförderer (5), dessen Abgabeende im Aufgabebereich des Teleskopgurtförderers (4) angeordnet ist, **dadurch gekennzeichnet, dass** eine Hebebühne (3) am Boden des Transportbehälters (1) angeordnet ist und auf der Hebebühne (3) der Teleskopgurtförderer (4) befestigt ist und der Zubringerförderer als linear fördernder Schrägförderer (5) ausgebildet ist, der einen hin und her bewegbaren Schlitten (25) zur Aufnahme einer die Stückgüter (33) aufnehmenden Schaufel (26) aufweist.

2. Vorrichtung nach Anspruch 1, **dadurch gekennzeichnet, dass** die Hebebühne (3) auf einem am Boden der Transportbehälters (1) angeordneten Drehkreuz (6) ruht.

3. Vorrichtung nach Anspruch 1 oder 2, **dadurch gekennzeichnet, dass** unterhalb des Gurtes (14) des Teleskopgurtförderers (4) ein teleskopartig ein- und ausfahrbarer Tragarm (16) angeordnet ist, an dessen äußerem Ende ein Korb (17) zur Aufnahme einer Bedienungsperson (18) befestigt ist.

4. Vorrichtung nach Anspruch 3, **dadurch gekennzeichnet, dass** am Korb (17) eine Bedienungsarmatur (35) zur Steuerung der Antriebe der Hebebühne (3), des Teleskopgurtförderers (4) und des Schrägförderers (5)angeordnet ist.

5. Vorrichtung nach einem der Ansprüche 1 bis 4, **dadurch gekennzeichnet, dass** die Hebebühne als Scherenhubtisch (3) ausgeführt ist.

6. Vorrichtung nach einem der Ansprüche 1 bis 5, **dadurch gekennzeichnet, dass** an der Rückseite des Gehäuses (30) des Teleskopgurtförderers (4) Öffnungen (36) zum Einführen der Zinken eines Gabelstaplers vorgesehen sind.

7. Vorrichtung nach einem der Ansprüche 1 bis 6, **dadurch gekennzeichnet, dass** die Schaufel (26) des Schrägförderers um ein Gelenk (27) nach vorne in Richtung des Transportgurtes (14) des Teleskopgurtförderers (4) kippbar ist.

8. Vorrichtung nach einem der Ansprüche 1 bis 7, **dadurch gekennzeichnet, dass** am Rahmen (19) des Schrägförderers (5) am aufgabenseitigen Ende eine Stützrolle (28) befestigt ist.

9. Vorrichtung nach Anspruch 7 oder 8, **dadurch gekennzeichnet, dass** zwei linearfördernde Schrägförderer (5, 5') parallel zueinander am Teleskopgurtförderer (4) befestigt sind, die in entgegengesetzter Richtung alternierend angetrieben sind.

## Claims

1. An apparatus for loading a transport container (1) such as a large-capacity wagon through a side opening (2) with unit loads (33) with a telescopic belt conveyor (4) which can be extended into the transport container (1) and is rotatable in the longitudinal direction of the transport container and with a feeder (5) arranged transversally to the conveying direction of the telescopic belt conveyor (4), with the delivery end of said feeder being arranged in the feeding region of the telescopic belt conveyor (4), **characterized in that** a lifting platform (3) is arranged on the floor of the transport container (1) and the telescopic belt conveyor (4) is fastened to the lifting platform (3) and the feeder is arranged as a linearly conveying slope conveyor (5) which comprises a reciprocating carriage (25) for receiving a scoop (26) receiving the unit loads (33).

2. An apparatus according to claim 1, **characterized in that** the lifting platform (3) rests on a turnstile (6) arranged on the floor of the transport container (1).

3. An apparatus according to claim 1 or 2, **characterized in that** a support arm (16) which can be extended and retracted in a telescopic manner is arranged beneath the belt (14) of the telescopic belt conveyor (4), with a basket (17) for receiving an operator (18) being fastened to the outer end of said support arm.

4. An apparatus according to claim 3, **characterized in that** an operating panel (35) is arranged on the basket (17) for controlling the drive of the lifting platform (3), the telescopic belt conveyor (4) and the slope conveyor (5).

5. An apparatus according to one of the claims 1 to 4, **characterized in that** the lifting platform is arranged as a scissors lift (3).

6. An apparatus according to one of the claims 1 to 5, **characterized in that** openings (36) for introducing the forks of a fork-lift are provided on the rear side of the housing (30) of the telescopic belt conveyor (4).

7. An apparatus according to one of the claims 1 to 6, **characterized in that** the scoop (26) of the slope conveyor can be tilted about a joint (27) forwardly in the direction of the conveyor belt (14) of the telescopic belt conveyor (4).

8. An apparatus according to one of the claims 1 to 7, **characterized in that** a support roll (28) is fastened to the frame (19) of the slope conveyor (5) at the feeding end.

9. An apparatus according to claim 7 or 8, **characterized in that** two linearly conveying slope conveyors (5, 5') are fastened parallel with respect to each other to the telescopic belt conveyor (4), which are driven in an alternating fashion in opposite directions.

## Revendications

1. Dispositif pour le chargement de marchandises en colis (33) dans un conteneur de transport (1), par exemple d'un wagon à grande capacité, par une ouverture latérale (2) avec un convoyeur à bande télescopique (4) pouvant être introduit dans le conteneur de transport (1) et pouvant pivoter dans le sens longitudinal du conteneur de transport et un convoyeur d'arrivée (5) perpendiculaire au sens de transport du convoyeur à bande télescopique (4), dont l'extrémité de dépôt se trouve dans la zone de prise en charge du convoyeur à bande télescopique (4), **caractérisé en ce qu'**une plate-forme élévatrice (3) est disposée sur le fond du conteneur de transport (1) et le convoyeur à bande télescopique (4) est fixé sur la plate-forme élévatrice (3) et le convoyeur d'arrivée est conformé comme un convoyeur incliné (5) à transport linéaire, qui possède un godet (26) recevant un chariot (25) mobile en va-et-vient recevant un godet (26) pour prendre en charge l'une des marchandises en colis (33).

2. Dispositif selon la revendication 1, **caractérisé en ce que** la plate-forme élévatrice (3) repose sur un croisillon de pivotement (6) disposé sur le fond du conteneur de transport (1).

3. Dispositif selon la revendication 1 ou 2, **caractérisé en ce qu'**il est prévu en dessous de la courroie (14) du convoyeur à bande télescopique (4) un bras portant (16) pouvant être rentré et sorti de façon télescopique, dont l'extrémité extérieure porte une nacelle (17) destinée à recevoir un opérateur (18).

4. Dispositif selon la revendication 3, **caractérisé en ce que** la nacelle (17) porte des éléments de commande (35) pour la commande des entraînements de la plate-forme élévatrice (3), du convoyeur à bande télescopique (4) et du convoyeur incliné (5).

5. Dispositif selon l'une quelconque des revendications 1 à 4, **caractérisé en ce que** la plate-forme élévatrice est conformée comme un table élévatrice à parallélogramme (3).

6. Dispositif selon l'une quelconque des revendications 1 à 5, **caractérisé en ce qu'**il est prévu sur la face arrière du boîtier (30) du convoyeur à bande télescopique (4) des ouvertures (36) pour le passage des bras de fourche d'un chariot élévateur à fourche.

7. Dispositif selon l'une quelconque des revendications 1 à 6, **caractérisé en ce que** le godet (26) du convoyeur incliné peut pivoter autour d'une articulation (27) vers l'avant en direction de la courroie de transport (14) du convoyeur à bande télescopique (4).

8. Dispositif selon l'une quelconque des revendications 1 à 7, **caractérisé en ce qu'**un rouleau d'appui (28) est fixé sur le bâti (19) du convoyeur incliné (5) à l'extrémité située du côté de dépose.

9. Dispositif selon la revendication 7 ou 8, **caractérisé en ce que** deux convoyeurs inclinés (5, 5') à transport linéaire sont fixés parallèlement l'un à l'autre sur le convoyeur à bande télescopique (4) et entraînés alternativement dans des sens opposés.
